# EUROPEAN PATENT APPLICATION

(11) **EP 1 591 421 A1**
(43) Date of publication of application: **02.11.2005**
(21) Application number: 04101822.7
(22) Date of filing: 29.04.2004
(51) Int. Cl.: C01F 11/02, C01F 5/22, C01G 1/02, C01G 25/02, C01G 23/053, C01F 5/24

(54) **Process for preparing nano- and micro-sized particles of inorganic compounds using a water-structure modifier**

(71) Applicant: Consorzio Interuniversitario per lo Sviluppo dei Sistemi a Grande Interfase, C.S.G.I, 50121 Firenze (IT)
(72) Inventor: BAGLIONI, Piero, 50010, FIESOLE (IT); DEI, Luigi, 50121, FIRENZE (IT); GIORGI, Rodorico, 59100, PRATO (IT); NINHAM, Barry William, 50019, SESTO FIORENTINO (IT)
(74) Representative: Gervasi, Gemma

(57) **Abstract**

The present inventions refers to a process for preparing nano- and micro-particles of inorganic compounds comprising adding water-structure "modifiers" as co-solutes, to the solutions of reactants in a homogeneous phase reaction. The present invention also refers to the nano- and micro-particles of inorganic compounds having dimensions comprised between 10 nm and 200 µm, obtainable by the above said process, and their use in several different industrial and technological fields; especially, in the treatment of ceramic surfaces, textile products, paper materials, for the production of varnishes, and in coating processes.

## Description

### Field of the invention

The present invention refers to the field of nano- and micro-particles of inorganic compounds, to be used in several industrial and technological fields, especially in the ceramic, textiles, varnishes, and paper industries.

### State of the art

Several methods have been exploited for preparing nano-particles of alkaline inorganic compounds including the homogeneous phase precipitation reaction from salt solutions, the sol-gel technique, the hydro-thermal method, the urea method, the electrolysis of an aqueous salt solution, the flame spraying, the reverse micelles (or microemulsions) route, and so on. Alkali and earth-alkali oxide nanoparticles were also obtained by calcinations of the corresponding hydroxide.

The precipitation of metal hydroxides from corresponding salt solutions is strongly affected by a variety of parameters such as reaction temperature, concentration of reacting species, and ageing time. In particular, it has been shown that temperatures above 100°C promote the formation of nano-scaled particles in nonaqueous media. Moreover, some studies report the significant effect of organic solvents on the shape and size of the particles obtained by precipitation.

Some papers dealt with the mechanisms by which Nature is able to control the size and shape of well-defined materials. A fundamental concept in the study of biomineralization concerns the molecular recognition of inorganic materials at organised organic macromolecular substrates. Mann et al. investigate this concept through the use of stearic acid monolayers in the controlled crystallisation of CaCO₃ from supersaturated solutions. Whereas crystallisation in the absence of a monolayer results in rhombohedral calcite crystals, the presence of an organised monolayer gives rise to oriented vaterite formation. These results have been explained by electrostatic and stereochemical interactions at the inorganic/organic interface and these observations support current theories of biomineralization, as well as being of potential significance in the crystal engineering of microscopic inorganic assemblies.

Most basic research in the field has tended to be focused on particle formation in micro-emulsions or related templates. Even if successful, these methods show the drawback of an inevitably poor yield. And for most real applications one still relies on e.g. co-precipitation of salts for which control of particle parameters is a problem.

In view of what above reported, the need of a process for preparing nano- and micro-particles of alkaline inorganic compounds, which eliminates the drawbacks highlighted above for the prior art processes, is deeply felt.

In the International Patent Applications No. PCT/IB03/01177 and No. PCT/EP02/00319, both in the name of the Applicant, some innovative ways for the preparation of inorganic micro- and nano-sized particles, to be used in several different industrial and technological fields, are reported. Most of them were based on the effect of temperature; preferably, ranging from 90°C to 150°C.

### Summary of the invention

Now the Applicant has surprisingly found that by simply adding a water-structure modifier to at least one of the reactants solutions in a double exchange reaction at room temperature of an homogeneous phase synthesis of inorganic compounds, the features such as size, morphology, and polydispersity of the so obtained particles, may be controlled, so that the desired nano- and micro-particles of inorganic compounds are obtained in good yields.

Subject of the invention is therefore the process for the preparation of nano- and micro-sized particles of inorganic compounds, comprising a homogeneous phase reaction between solutions of suitable reactants to obtain a suspension from which the said particles are recovered by filtration, characterised in that at least a water-structure modifier is added as a co-solute to at least one of the said solutions of suitable reactants.

Further subjects of the invention are: the nano- and micro-sized particles having dimensions comprised between 10 nm and 200 µm, obtainable by the above said process; the compositions comprising the present nano- and micro-sized particles suspended in a suitable solvent; and their use for the treatment of ceramic surfaces, textile products, paper materials, for the production of varnishes, and in coating processes.

Features and advantages of the present invention will be illustrated in detail in the following description.

### Detailed description of the invention

According to the present invention, by the expression "water-structure modifier" an additive able to modify the structure of water, i.e. the hydrogen-bond network of water, is meant.

Such a water-structure modifier may be an additive able to increase the structuring of pure water or an additive, which destroys the structure of pure water. In the first case the terms "kosmotrope" or "order-maker" or "structure-maker" are used, whereas in the second case, the terms "chaotrope" or "disorder-maker" or "structure-breaker" are used.

These terms, as well as the term "water-structure modifier" that refers to both "water-structure order-maker" and "water-structure disorder-maker", are commonly used by any person skilled in the art and internationally accepted as descriptive terms of specific classes of compounds having the above said behaviour in relation to the hydrogen-bond network of the solvent.

The terms "kosmotrope" (order-maker) and "chaotrope" (disorder-maker) originally denoted solutes that stabilised, or destabilised respectively, proteins and membranes. Later, they referred to the apparently correlating property of increasing, or decreasing respectively, the structuring of water as reported above (see for example Hribar B. et al. *J. Am. Chem*. *Soc.* 2002, 124, 12302-12311).

According to the present invention, preferred water-structure modifiers, that are water-structure order-maker are selected from monosaccharides, disaccharides, oligosaccharides and polysaccharides; amongst these, particularly preferred are glucose, fructose, sucrose, β lactose and α-β lactose.

As water-structure disorder-maker, organic molecules having a medium/high dipolar momentum, such as urea and acetone, are preferably used according to the present invention.

According to the present process, any water-structure modifier can be used alone or in combination with each other.

When the present inorganic compounds are selected from the group consisting of metal hydroxides, the homogeneous phase reaction comprised in the present process can be carried out for example between aqueous solutions of the corresponding metal chloride and of sodium hydroxide.

When the present inorganic compounds are selected from the group consisting of metal carbonates and basic carbonates, the homogeneous phase reaction comprised in the present process can be carried out for example between aqueous solutions of the corresponding metal chloride and of sodium carbonate.

When the present inorganic compounds are selected from the group consisting of metal oxides, the homogeneous phase reaction comprised in the present process can be carried out for example between aqueous solutions of the corresponding metal chloride and of sodium hydroxide, and the nano- and micro-sized particles recovered by filtration are then calcinated to convert the hydroxide into the corresponding oxide. The calcination according to the invention may be carried out in the usual operative conditions, which are commonly used for carrying out calcination and well-known to any skilled person.

Examples of inorganic compounds according to the invention are selected from the group consisting of hydroxides, carbonates and basic carbonates of alkali, earth-alkali and transition metals, having low solubility in water or in less polar solvents, the corresponding oxides, and mixtures thereof.

Preferred inorganic compounds according to the invention are selected from the group consisting of Li₂O, Na₂O, K₂O, MgO, CaO, SnO, SnO₂, PbO, Pb₂O, Pb₂O₃, BiO, Bi₂O₃, Sb₂O₃, ZrO₂, TiO₂, LiOH, NaOH, KOH, Mg(OH)₂, Ca(OH)₂, Al(OH)₃, Sn(OH)₂, Sn(OH)₄, Pb(OH)₂, Bi(OH)₃, Sb(OH)₃, Zr(OH)₄, Ti(OH)₄, Zn(OH)₂, Co(OH)₂, Ni(OH)₂, Fe(OH)₂, Li₂CO₃, Na₂CO₃ decahydro, Na₂CO₃, K₂CO₃, MgCO₃, CaCO₃, anhydrous and basic PbCO₃, Bi₂O₂CO₃, Zr(CO₃)₂, Ti(CO₃)₂, ZnCO₃, CoCO₃, NiCO₃, FeCO₃, and mixtures thereof.

Particularly preferred inorganic compounds according to the invention are selected from the group consisting of Mg(OH)₂, Ca(OH)₂, MgO, ZrO₂, TiO₂, MgCO₃ and CaCO₃.

According to a preferred embodiment of the present invention, concentration of the reactants solutions ranges from 0.01 M to 5 M, preferably from 0.2 M to 1 M.

The "water-structure modifier" may be added to the reactants solutions in the form of aqueous solution, preferably having a concentration ranging from 0.01 M to 5 M; more preferably, the concentration ranges from 0.1 M to 1 M.

According to the present process, the water-structure modifiers can be added to any of the two reactant solutions; more preferably to the cation solution. They can be used alone or in combination between each other: for example urea and acetone, or urea and a sugar, can be added as water-structure modifiers.

The molar ratio between the water-structure modifier (or water-structure modifiers, if more than one is used) and the reactant may range for example between 10 and 0.01; preferably, the molar ratio is 2.

When two water-structure modifiers are added to the reactant solution, the molar ratio between them two ranges from 10 to 0.1; preferably, the molar ratio is 1.

The double exchange reaction in homogeneous phase according to the present process may be carried out by mixing, under stirring, the reactants solutions at room temperature or higher, preferably at room temperature. This reaction yields a suspension of nano- or micro-particles, that are recovered by filtration, for example by filtration through a 0.1 µm Millipore® membrane.

After filtration, the so obtained nano- or micro-particles are preferably subjected to a purification procedure, selected from one or more washings with water and dialysis through a tubular membrane.

In the purification procedure by washing, at least five cycles of washing and centrifuging are preferably carried out to ensure complete removal of the byproducts, sodium chloride and the added water-structure modifiers.

The very brief process of washing with distilled water caused no significant change in particle size or shape, due to the very low solubility of the inorganic compounds of interest.

The purification from sodium chloride and from the added water-structure "modifiers", by dialysis method, is based on the osmotic pressure through the membranes. For example, according to this procedure, dispersions of freshly prepared nano- or micro-particles are put into a tubular membrane, that is left into a beaker with ultra-pure water for 72 hours, changing water every 18 hours, until any chloride ions were detected by AgNO₃ solution test. At the end, the particles can be collected by filtration through a 0.1 µm Millipore® membrane.

The present process as described above allows the preparation of micro- and nano-particles with well-defined and new characteristics, especially size, crystallinity, polydispersity, and morphology.

X-ray diffraction patterns of the particles obtained with the present process provided evidences about their crystallinity, and the analysis of the peak broadening according to the Scherrer method and later improvements, showed that the present particles are nano-sized.

Observations by Scanning Electron Microscopy (SEM) revealed a monodisperse distribution of the sizes for the particles obtained with the present process; for example, very regularly shaped needle-crystals of Mg(CO₃)₂ were obtained with the present process in a solution comprising the water-structure modifiers lactose and urea.

The dimensions of the micro- and nano-particles obtainable by the present process are comprised between 10 nm and 200 µm, preferably between 10 nm and 50 µm, and more preferably between 10 nm and 300 nm.

The present nano- and micro-particles are particularly useful in several applications, such as the coating of ceramic, textile and paper surfaces.

They can be used as such or suspended in a suitable solvent, selected for example from the group consisting of water, ethyl ether, acetone, pentane, methanol, ethanol, 1-propanol, 2-propanol, butanol, and mixtures thereof, and can be applied onto the surface to be treated by spraying, immersing, brushing, or other conventional procedures.

The following examples are given to provide non-limiting illustrations of the present invention.

### EXAMPLE 1

### Preparation of Ca(OH)₂ nano-particles

Calcium hydroxide nano-particles, from homogeneous phase reaction, have been achieved by mixing equal volume amount of a 1 M NaOH aqueous solution with a 0.5 M CaCl₂ aqueous solution and a 0.25 M α-β lactose aqueous solution.

The solutions were mixed under vigorous stirring, at room temperature (25°C). Afterwards, a ripening time (around 1 hour) was left.

They were mixed under continuous stirring and keeping the temperature of the mixture constant within ± 1°C. Aqueous Ca(OH)₂ suspension was allowed settling by centrifugation (6000 rpm for 15 minutes). The supernatant solution was discarded and the remaining suspension was washed five times with water, in a cyclic procedure, to reduce the NaCl concentration below 10⁻⁶ M. Each time, the dilution ratio between the concentrated suspension and the washing solution was about 1:10. The complete removal of NaCl from the suspension was controlled by the AgNO₃ test.

After the washing procedure, the particles were dried at 50°C for 8 hours in an under vacuum oven, in order to prevent hydroxides to CO₂ from atmosphere.

The thus obtained nano-particles of calcium hydroxide synthesised in a lactose solution environment, are hexagonally shaped, and their size is about 250 nm.

A relevant fraction of the particles is under 200 nm, and particles thickness from 50-60 nm to 150 nm was observed.

### EXAMPLE 2

### Preparation of Mg(OH)₂ nano-particles

Magnesium hydroxide nano-particles, from homogeneous phase reaction, have been obtained by mixing equal volume amount of a 0.2 M NaOH aqueous solution with a 0.1 M MgCl₂ solution plus sucrose 1 M.

The NaOH aqueous solution was added dropwise to salt/sugar solution keeping the temperature around 25°C.

The synthesised particles were purified with tube-membranes for dialysis. Dispersion were left into a beaker with ultra-pure water for 72 hours, changing water every 18 hours, until any chloride ions were detected by AgNO₃ solution test. At the end, particles were collected through a 0.1 µm Millipore® membrane.

After the washing procedure, the particles were dried at 50°C for 8 hours in an under vacuum oven, in order to prevent hydroxides to CO₂ from atmosphere.

The surface area analysis carried out on the Mg(OH)₂ nano-particles synthesised in a sucrose solution as above described, showed that these particles have a larger (almost doubled) specific surface area than the blank reference consisting of Mg(OH)₂ synthesised in pure water. This result agrees with the peak broadening analysis of the XRD pattern, which shows a crystallite size three time lower than the blank reference (from 180 to 60 Angstrom).

Scanning Electron Microscopy analysis showed that the addition of sucrose strongly influences the crystal habitus of particles; in fact, a needle-like morphology is shown by the Mg(OH)₂ particles obtained as described above and purified by washing-centrifugation cycles, and this morphology is not obtained without the addition of the above said water-structure modifier. The thickness of these needles is around 400 nm whereas the length ranges from 5 to 20 µm.

### EXAMPLE 3

### Preparation of MgCO₃ nano-particles

Magnesium carbonate nano-particles, from homogeneous phase reaction, have been obtained by mixing equal volume amount of a 2 M NaOH aqueous solution with a 1 M MgCl₂ solution plus α-β lactose 1 M and urea 1 M.

The NaOH aqueous solution was added, under vigorous stirring, to salt/sugar solution, keeping the temperature around 25°C.

The synthesised particles were purified with tube-membranes for dialysis. Dispersion were left into a beaker with ultra-pure water for 72 hours, changing water every 18 hours, until any chloride ions were detected by AgNO₃ solution test. At the end, particles were collected through a 0.1 µm Millipore® membrane.

After the washing procedure, the particles were dried at 50°C for 8 hours in an under vacuum oven, in order to prevent hydroxides to CO₂ from atmosphere.

XRD patterns of magnesium carbonate powders purified by dialysis, accord with the structure of Nesquehonite [Mg(HCO₃)(OH)·2(H₂O)], which crystallises in the monoclinic crystal system. The crystallite size by the Scherrer equation is around 50 nm; but urea in presence of α-β lactose (both in 1 M concentration) induced meaningful changes in the crystal morphology. The crystallite size does not change, but the surface area is strongly reduced (ten times lower) compared to a blank reference consisting of blank reference consisting of [Mg(HCO₃)(OH)·2(H₂O)] synthesised in pure water. In fact, elongated crystals grow during the ripening time required by purification, and well crystallised and much regularly shaped needle-like crystals were obtained.

### EXAMPLE 4

### Preparation of ZrO₂ nano-particles

Zirconium hydroxide, from homogeneous phase reaction, have been obtained by mixing equal volume amount of a 2 M NaOH aqueous solution with a 1 M ZrOCl₂ solution plus α-β sucrose 0.5 M.

The NaOH aqueous solution was added, under vigorous stirring, to salt/sugar solution, keeping the temperature around 25°C.

The synthesised particles were purified with tube-membranes for dialysis. Dispersion were left into a beaker with ultra-pure water for 72 hours, changing water every 18 hours, until any chloride ions were detected by AgNO₃ solution test. Then particles were collected through a 0.1 µm Milipore® membrane.

After the washing procedure, the particles were dried at 50°C for 8 hours in an under vacuum oven, in order to prevent hydroxides to take CO₂ from atmosphere. Hydroxide powders were calcinated in a muffle furnace at 550°C for around 3 hours, thus obtaining tiny particles of zirconium oxide having size ranging from 50 to 250 nm.

## Claims

1. A process for the preparation of nano- and micro-sized particles of inorganic compounds, comprising a homogeneous phase reaction between solutions of suitable reactants to obtain a suspension from which the said particles are recovered by filtration, **characterised in that** at least a water-structure modifier is added as a co-solute to at least one of the said solutions of suitable reactants.

2. The process according to claim 1, wherein said inorganic compounds are selected from the group consisting hydroxides, carbonates, basic carbonates and oxides of alkali, earth-alkali and transition metals.

3. The process according to claim 1, wherein when said inorganic compounds are selected from the group consisting of hydroxides of alkali, earth-alkali and transition metals, the said solutions of suitable reactants are solutions of the corresponding alkali, earth-alkali or transition metal chloride and of sodium hydroxide.

4. The process according to claim 1, wherein when said inorganic compounds are selected from the group consisting of carbonates and basic carbonates of alkali, earth-alkali and transition metals, the said solutions of suitable reactants are solutions of the corresponding alkali, earth-alkali or transition metal chloride and of sodium carbonate.

5. The process according to claim 1, wherein when said inorganic compounds are selected from the group consisting of oxides of alkali, earth-alkali and transition metals, the said solutions of suitable reactants are aqueous solutions of the corresponding alkali, earth-alkali or transition metal chloride and of sodium hydroxide, and the nano- and micro-sized particles recovered by filtration are then calcinated to convert the hydroxide into the corresponding oxide.

6. The process according to claim 1, wherein said inorganic compounds are selected from the group consisting of Li₂O, Na₂O, K₂O, MgO, CaO, SnO, SnO₂, PbO, Pb₂O, Pb₂O₃, BiO, Bi₂O₃, Sb₂O₃, ZrO₂, TiO₂, LiOH, NaOH, KOH, Mg(OH)₂, Ca(OH)₂, Al(OH)₃, Sn(OH)₂, Sn(OH)₄, Pb(OH)₂, Bi(OH)₃, Sb(OH)₃, Zr(OH)₄, Ti(OH)₄, Zn(OH)₂, Co(OH)₂, Ni(OH)₂, Fe(OH)₂, Li₂CO₃, Na₂CO₃ decahydro, Na₂CO₃, K₂CO₃, MgCO₃, CaCO₃, anhydrous and basic PbCO₃, Bi₂O₂CO₃, Zr(CO₃)₂, Ti(CO₃)₂, ZnCO₃, CoCO₃, NiCO₃, FeCO₃, and mixtures thereof.

7. The process according to claim 1, wherein said inorganic compounds are selected from the group consisting of Mg(OH)₂, Ca(OH)₂, MgO, ZrO₂, TiO₂, MgCO₃ and CaCO₃.

8. The process according to claim 1, wherein said water-structure modifier is selected from the group consisting of mono-, di-, oligo-, poly-saccharides, acetone, urea, their derivatives, and mixtures thereof.

9. The process according to claim 1, wherein said water-structure modifier is selected from the group consisting of glucose, fructose, sucrose, β-lactose and α-β-lactose, acetone, and urea.

10. The process according to claim 1, wherein the said solutions of suitable reactants are solution of the reactants in water or in an organic solvent miscible with water.

11. The process according to claim 1, wherein the said homogeneous phase reaction is carried out by mixing, under stirring, the said solutions at room temperature.

12. The process according to claim 1, further comprising a purification treatment of the said nano- and micro-particles selected from one or more washings with water and dialysis through a tubular membrane.

13. The process according to claim 1, wherein said water-structure modifier is added to the reactants solutions in the form of aqueous solution.

14. The process according to claim 13, wherein the concentration of the water-structure modifier ranges from 0.01 M to 5 M, and the concentration of the reactants solutions ranges from 0.01 M to 5 M.

15. The process according to claim 13, wherein the concentration of the water-structure modifier ranges from 0.1 M to 1 M, and the concentration of the reactants solutions ranges from 0.2 M to 1 M.

16. Nano- and micron-sized particles of inorganic compounds having dimensions comprised between 10 nm and 200 µm, obtainable by the process as described in claims 1-15.

17. The nano- and micron-sized particles according to claim 16, having dimensions comprised between 10 nm and 50 µm.

18. The nano- and micron-sized particles according to claim 16, having dimensions comprised between 10 nm and 300 nm.

19. A dispersion of the nano- and micro-particles as described in claims 16-18 in a suitable liquid phase.

20. The dispersion according to claim 19, wherein said liquid phase is selected from the group consisting of water, ethanol, propanol, and isopropanol.

21. Use of the nano- and micron-sized particles as defined in claims 16-18 or of the dispersion as defined in claims 19-20, for the treatment of ceramic surfaces, textile products, paper materials, for the production of varnishes, and in coating processes.
